# EUROPEAN PATENT APPLICATION

(11) **EP 3 958 544 A1**
(43) Date of publication of application: **23.02.2022**
(21) Application number: 20791950.7
(22) Date of filing: 17.04.2020
(51) Int. Cl.: H04M 1/00

(54) **COMMUNICATION TERMINAL, APPLICATION PROGRAM FOR COMMUNICATION TERMINAL, AND COMMUNICATION METHOD**

(30) Priority: 19.04.2019 JP 2019080558
(71) Applicant: Bonx Inc., Tokyo 154-0012 (JP)
(72) Inventor: MASUDA Afura, Tokyo 154-0012 (JP)
(74) Representative: Grünecker Patent- und Rechtsanwälte PartG mbB
(86) International application number: PCT/JP2020/016858
(87) International publication number: WO 2020/213711

(57) **Abstract**

The present invention provides a communication terminal, an application program for communication terminal, and a communication method, which can record a video during a group call and store moving image data in a user's communication terminal or deliver the recorded video data added with voice data from a user's communication terminal. The video recording mode is switched on during a group call, user's own voice data 50, intended person's voice data 52, and video recording data 54 are acquired by the communication terminal 10A, and the user's own voice data 50 and the intended person's voice data 52 are added to the video recording data 54, whereby moving image data 56 is generated. Therefore, a video can be recorded during a group call, and the moving image data 56 can be stored in a user's communication terminal 10A, including a user's experience. Furthermore, the user's own voice data 50 and the intended person's voice data 52 are added to the video recording data 52, and the added data is live-streamed to other communication terminals so that user's experience is shared with others.

## Description

### TECHNICAL FIELD

The present invention relates to a communication terminal, an application program for communication terminal, and a communication method. More specifically, the present invention relates to a video recording technology and a video delivery technology during a call.

### BACKGROUND

The specification of conventional smart phones do not allow OS-standard video shooting application program to start, using a call feature such as a message chat application program. Patent Document 1 concerning group calling describes the constitution including a means for extracting the speech part of a human voice detected by a headset with a high degree of accuracy and generating voice data; a means for dynamically controlling communication quality in a weak signal environment; and a means for controlling reproduction that is robust over noises with environment concerns, which solves the problem that occurs in many-to-many communication in a group by linking the means to each other.

### Document in the existing art

### Patent Document

Patent Document 1: JP 6416446 B

### SUMMARY

However, conventional group call technologies and the technology described in Patent Document 1 cannot record a video during a group call but store voices in the server. It is preferable to be able to store moving image data recorded on a user terminal from the viewpoint of enjoying a user's experience. Furthermore, it is effective to share a user's experience with others from the viewpoint of enjoying the user's experience. In general, a large amount of data, such as moving image data causes the communication network to be overloaded. Especially, the communication among multiple users during a group call, etc., causes delay in transmitting and receiving moving images. Since the communications among users requires real-time voice calling, there is need for data communication without delay by avoiding network overload as much as possible. In addition, in the case of talking over the phone while recording a moving image, it is necessary to generate moving images from which the time "gap" between the frame and voice of the recorded moving image and the voice of an intended person is eliminated as much as possible.

The present invention focuses on the above-mentioned points and provides a communication terminal, an application program for communication terminal, and a communication method, which can record a video during a call and store moving image data generated during the call and recording in a user's communication terminal or deliver the recorded video data added with voice data from a user's communication terminal.

The present invention provides a communication terminal including:
a communication unit that communicatively connects with another communication terminal;
an intended person's voice data acquisition unit that acquires intended person's voice data that is data on the voice of an intended person who is connected through communication;
   an imaging unit that takes a video of the outside;
   a video recording data acquisition unit that acquires video recording data taken by the imaging unit; and
   a moving image generation unit that adds the intended person's voice data to the video recording data and generates moving image data.

The present invention also provides a communication terminal including:
a communication unit that communicatively connects with another communication terminal;
an intended person's voice data acquisition unit that acquires intended person's voice data that is data on the voice of an intended person who is connected through communication; and
a delivery unit that adds the intended person's voice data to the video recording data containing the video of the outside and delivers the added data to another communication terminal through the communication unit.

The present invention also provides an application program for a communication terminal that causes a communication terminal to execute the steps of:
communicatively connecting with another terminal:
acquiring intended person's voice data that is data on the voice of an intended person who is connected through communication;
taking a video of the outside and acquiring the video recording data; and
adding the intended person's voice data to the video recording data and generating moving image data.

The present invention also provides an application program for a communication terminal that causes a communication terminal to execute the steps of:
communicatively connecting with another terminal;
acquiring intended person's voice data that is data on the voice of an intended person who is connected through communication; and
adding the intended person's voice data to the video recording data containing the video of the outside and delivering the added data to the another communication terminal communicatively connected.

The present invention also provides a communication method executed by a communication terminal, including the steps of:
communicatively connecting with another terminal;
acquiring intended person's voice data that is data on the voice of an intended person connected through communication; and
adding the intended person's voice data to the video recording data containing a video of the outside and generating moving image data.

According to the present invention, the video recording mode is switched on during a call, user's own voice data, intended person's voice data, and video recording data are acquired by the communication terminal, and the user's own voice data and the intended person's voice data are added to the video recording data, whereby moving image data is generated. Therefore, a video can be recorded during a call, and the video recording data can be stored in a user's communication terminal, including a user's experience. Furthermore, the user's own voice data and the intended person's voice data are added to the video recording data taken during a call, and the added data is live-streamed to other communication terminals. This enables a user to share a user's experience with others. For example, when an intended person whom a user wants to video-record is away from a camera and a microphone, moving image data is generated by adding the sound acquired by an intended person's communication terminal. Therefore, the sound can be clearly acquired, and the quality can be maintained.

### BRIEF DESCRIPTION OF THE DRAWINGS

Fig. 1 is a conceptual diagram illustrating the overview of the entire system including the communication terminal according to one embodiment of the present invention.
Fig. 2 is a block diagram illustrating the hardware configuration and the function structure of the communication terminal according to the embodiment.
Fig. 3 shows one example data stored in the memory unit of the communication terminal according to the embodiment.
Fig. 4 is a block diagram illustrating the configuration of a headset used in the system.
Fig. 5 is a flow chart illustrating one example video recording procedure during a group call according to the embodiment.
Fig. 6 is a flow chart illustrating one example procedure to turn on/off the recording of an environmental sound during video recording according to the embodiment.
Fig. 7 shows one example screen of the communication terminal according to the embodiment during a group call.
Fig. 8 is a flow chart illustrating one example video recording scene during a group call according to the embodiment.
Fig. 9 is a flow chart illustrating one example video recording screen during a group call according to the embodiment.

### DETAILED DESCRIPTION

Embodiments of the present invention will be described below with reference to examples.

### Entire configuration

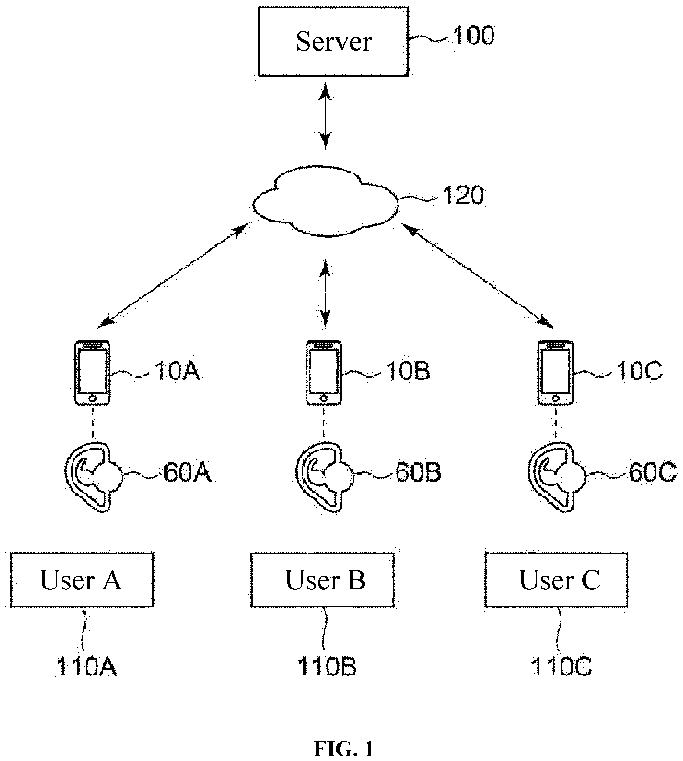

Fig. 1 is a conceptual diagram illustrating the overview of the entire system including the communication terminal according to the embodiment. This system enables the video recording and live streaming (real-time distribution) during a group call. This system also can store a user's experience (which a user has seen and heard) in a user's communication terminal. This system also allows a user's communication terminal for live-streaming to other communication terminals. The system includes a plurality of communication terminals 10A-10C of users 110A-110C, a server 100 that manages a group call among the plurality of communication terminals 10A-10C, and headsets 60A-60C with functions such as a microphone and a speaker.

For example, the server 100 is provided with a VoIP (Voice Over Internet Protocol) server to control voice communication among two or more communication terminals 10A-10C and an API (Application Programmable Interface) that manages the connections of a plurality of communication terminals 10A-10C and the allocation from the VoIP server. The VoIP server controls the exchanging of fragmentary voice packets (calls) among the plurality of communication terminals 10A-10C. The API server has a role as a management server that achieves a group call, by exchanging information required for the group call and specifying a group for a VoIP server based on the information during a group call among the plurality of communication terminals 10A-10C. The server 100 may be composed of one server computer. The server 100 can connect with a network 120 including the Internet and transmit and receive data.

The communication terminals 10A-10C can communicate with each other by transmitting and receiving data through a network 120. The communication terminals 10A-10C and the server 100 can communicate with each other in the same way. One example of the network 120 is achieved by a wired network and a wireless network such as a Wi-Fi^{®}, LTE (Long Term Evolution), 4G (fourth-generation cell-phone), or 5G (fourth-generation cell-phone) network, which can deal with a large communication volume. The communication terminals 10A-10C and the headsets 60A-60C can transmit and receive voice data through short distance wireless communication, for example, Bluetooth ^{®} Low Energy (BLE) that needs little electricity for a small communication volume and a short communication distance. The voice call among the communication terminals 10A-10C is not limited to that based on voice packets and may be that through a general mobile network.

If the communication terminals 10A-10C have the same function to manage voice communication as the above-mentioned function of the voice communication with the server 100, the server 100 can be omitted from the system configuration. The number of communication terminals 10A-10C shown in Fig. 1 is one example and may be increased and decreased if necessary. If the communication terminals 10A-10C have the same functions as those of the headsets 60A-60C described later, the headsets 60A-60C may be omitted from the system configuration.

### Configuration of communication terminal

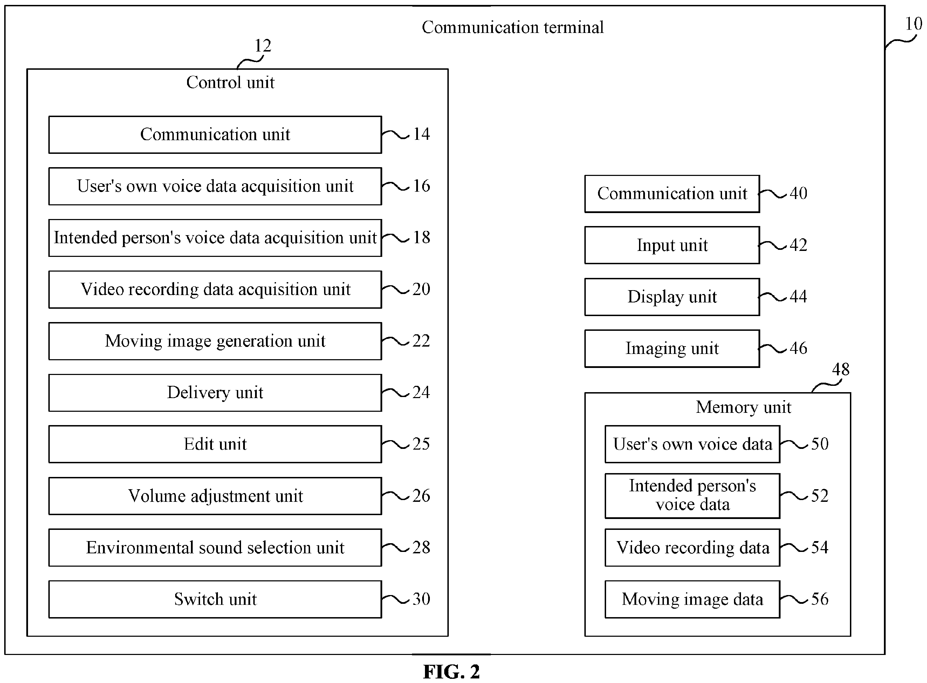

Fig. 2 is a block diagram illustrating the hardware configuration and the function structure of the communication terminal 10 according to the embodiment. The communication terminal 10 may be a mobile phone, a smart phone, a tablet, a communication game machine, or the like. The communication terminals 10A-10C shown in Fig. 1 have the same configuration as that of the communication terminal 10. The communication terminal 10 has a control unit 12, a communication unit 40, an input unit 42, a display unit 44, an image unit 46, and a memory unit 48.

The control unit 12 includes a CPU (Central Processing Unit), a RAM (Random Access Memory), and a ROM (Read Only Memory). The control unit 12 reads a predetermined program to achieve a call management unit 14, a user's own voice data acquisition unit 16, an intended person's voice data acquisition unit 18, a video recording data acquisition unit 20, a moving image generation unit 22, a delivery unit 24, an edit unit 25, a volume adjustment unit 26, an environmental sound selection unit 28, and a switch unit 30.

The call management unit 14 manages calls with other communication terminals (e.g., the communication terminals 10B and 10C for the communication terminal 10A), which starts an application for a group call and manages a group. The server 100 may manage a group call if necessary.

The user's own voice data acquisition unit 16 acquires user's own voices during a call and generates user's own voice data 50. The user's own voice data may be generated from voices collected through the microphone of the communication terminal 10 or may be received and acquired from voice data transmitted from the headset 60 described later to the communication terminal 10. The generated user's own voice data 50 is stored in the memory unit 48. Time information is added to the user's own voice data 50 if necessary.

The intended person's voice data acquisition unit 18 acquires intended person's voice data 52 that is the data on the voice of an intended person connected through communication. The intended person's voice data acquisition unit 18 may generate intended person's voice data 52 from the voice of an intended person during a general voice call or receive and acquire a fragmentary voice packet generated in the communication terminal of an intended person in the communication unit 40 through the network 120. The acquired intended person's voice data 52 is stored in the memory unit 48. Time information is added to the intended person's voice data 52 if necessary.

The video recording data acquisition unit 20 acquires video recording data 54 (only image data) containing the outside imaged by the imaging unit 46. The acquired video recording data 54 is stored in the memory unit 48. Time information is added to the video recording data 54 if necessary.

The moving image generation unit 22 adds the user's own voice data 50 and the intended person's voice data 52 to the video recording data 54 and generates moving image data 56. The generated moving image data 56 is stored in the memory unit 48. If the user's own voice data 50, the intended person's voice data 52, and the video recording data 54 each have time information, the moving image generation unit 22 may generate moving image data 56 with synchronizing the time information. Moreover, if the intended person's voice data 52 and the video recording data 54 have time information, the moving image generation unit 22 may sequentially add the user's own voice data 50 to the video recording data 54, and add the intended person's voice data 52 to the video recording data 54 with synchronizing the time information to generate the moving image data 56. Alternatively, the moving image generation unit 22 may sequentially add the user's own voice data 50 and the intended person's voice data 52 to the video recording data 54 to generate moving image data 56 in real time, without using time information. In other words, "occasionally input voices of an intended person" are synthesized to a moving image recorded by a user in real time This configuration stores video recording data in the communication terminal 10 at hand without transmitting and receiving a large amount of video recording data (with a large file size), receives a small amount of intended person's voice data 52 (with a small file size) through communication, and synthesizes these two data. This can minimize the delay of network, etc., that is caused by load to generate high quality moving image data in real time. This also can allow the communication terminal 10 such as a general smart phone to generate realistic moving image data without taking time and trouble for, for example, mixing voice tracks and video recording tracks with special software.

The delivery unit 24 adds the acquired user's own voice data 50 and intended person's voice data 52 to the video recording data imaged by the imaging unit 46 during a call and live-streams the added data to other communication terminals through the communication unit 40 and the network 120. The live-streaming from the delivery unit 24 may be conducted in parallel with or in place of the generation of a moving image by the moving image generation unit 22.

The edit unit 25 receives and acquires moving image data generated by another communication terminal 10 through the communication unit 40 and mixes the acquired moving image data with the moving image data 56 generated in the communication terminal 10. For example, the user 110A takes a moving image of user 110B's performance (e.g. skateboarding) with the terminal 10A while another user 110C is taking a moving image of user 110B's performance from a position and an angle that are different from those at which the user 110A is. Their generated moving image data are mixed with each other to entertain the users. The edited moving image data 56 is stored in the memory unit 48 if necessary.

The volume adjustment unit 26 adjusts the volume of the acquired user's own voice data 50 and intended person's voice data 52. Specifically, the volume adjustment unit 26 equalizes the volumes of the user's own voice data 50 and the intended person's voice data 52 and reduces the volume of voices of a person who is taking a moving image. The adjustment by the volume adjustment unit 26 may be conducted automatically or set to a content input and received from the input unit 42 by a user.

The environmental sound selection unit 28 turns on/off the function to cut off an environmental sound and selects an environmental sound to be cut off during video recording. If the environmental sound cut function is turned off during video recording, acquisition of the voice data of a user whose video is taken (intended person's voice data) can be prevented from being delayed. On the other hand, if the environmental sound cut function is turned on, an environmental sound around a user whose video is taken can be cut off to acquire clear intended person's voice data

For example, if the environmental sound cut function is turned off, the environmental sound selection unit 28 of the communication terminal 10A of a user 110A transmits a stop signal for the environmental sound cut function to the communication terminal 10B of a user 110B who is taking a moving image through the communication unit 40. When the communication terminal 10B receives the stop signal through the communication unit 40, the environmental sound selection unit 28 of the communication terminal 10B transmits a stop signal for the environmental sound cut function to the headset 60B through short distance wireless communication. The headset 60B stops the environmental sound cut function in response to the stop signal for the environmental sound cut function that has been received through short distance wireless communication. Stopping the environmental sound cut function can prevent the transmitting and receiving of voice data from being delayed to increase the realistic by delivering noises in the surrounding.

On the other hand, if the environmental sound cut function is turned on, the environmental sound selection unit 28 of the communication terminal 10A of a user 110A transmits a start signal for the environmental sound cut function to the communication terminal 10B of a user 110B who is taking a moving image through the communication unit 40. When the communication terminal 10B receives the start signal through the communication unit 40, the environmental sound selection unit 28 of the communication terminal 10B transmits a start signal for the environmental sound cut function to the headset 60B through short distance wireless communication. The headset 60B starts the environmental sound cut function in response to the start signal for the environmental sound cut function that has been received through short distance wireless communication. The environmental sound cut function offers an advantage of making communication smoother by delivering the clear voices of the user 110B.

As described above, the environmental sound cut function can be freely turned on/off by a user. If a user wants to cut off environmental sounds but leave some, the user may select automatically or set to cut off continuous environmental sounds (breathing and wind noises) and not to cut off sudden environment sounds (of a landing and a sharp turn).

The switch unit 30 switches between the call mode and the video recording mode with the button for the switch that is displayed in the display unit 44, which starts and stops the video recording function during a call

The communication unit 40 communicatively connects with other communication terminals through the server 100 and the network 120 to transmit and receive data. The communication unit 40 also communicatively connects with the headset 60 through short distance wireless communication to transmit and receive data.

The input unit 42 includes a touch panel and a microphone but does not limited thereto. For example, the display unit 44 is a touch panel. The imaging unit 46 includes a camera.

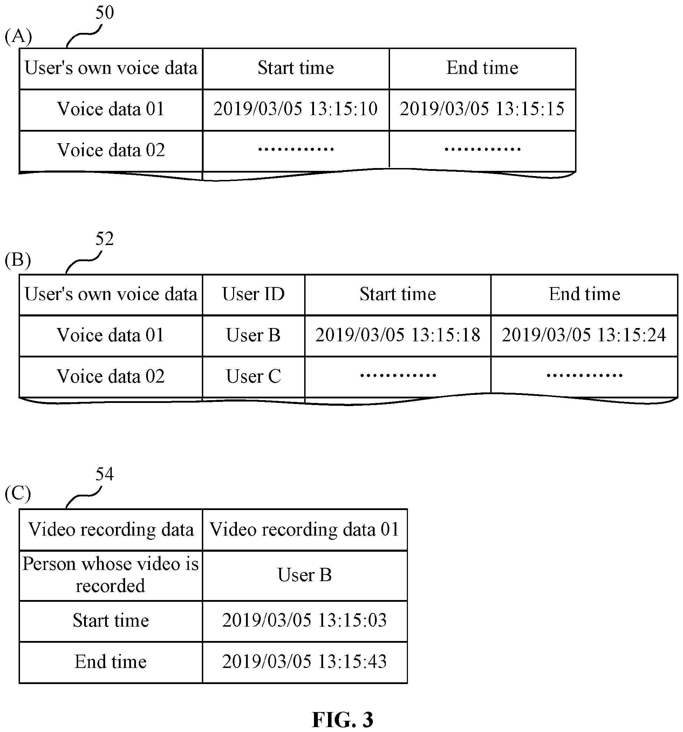

The memory unit 48 stores various data including user's own voice data 50, intended person's voice data 52, and video recording data 54 in the example of Fig. 2. Fig. 3 shows one example data stored in the memory unit 48 of the communication terminal 10 according to the embodiment. The various data to which time information is added is explained below as an aspect. However, time information may not added to the various data in the case of where the user's own voice data 50 and the intended person's voice data 52 may be synthesized in real time, and then the synthesized voice data is added to video recording data. Fig. 3(A) shows one example user's own voice data 50. The user's own voice data 50 containing fragmentary user's own voice data (e.g., voice data 01 and 02) and time information on a start time (e.g., 2019/03/05 13:15:10) and an end time (e.g., 2019/03/05 13:15:15) is stored.

Fig. 3(B) shows one example intended person's voice data 52. The intended person's voice data 52 containing fragmentary intended person's voice data (e.g., voice data 01 and 02), user IDs (e.g., User B and C), and time information on a start time (e.g., 2019/03/05 13:15:18) and an end time (e.g., 2019/03/05 13:15:24) is stored.

Fig. 3(C) shows one example video recording data 54. The video recording data 54 containing a video recording data ID (e.g., video recording data 01) and a person whose video is recorded (e.g., User B), and time information on a start time (e.g., 2019/03/05 13:15:03) and an end time (e.g., 2019/03/05 13:15:43) is stored.

### Configuration of headset

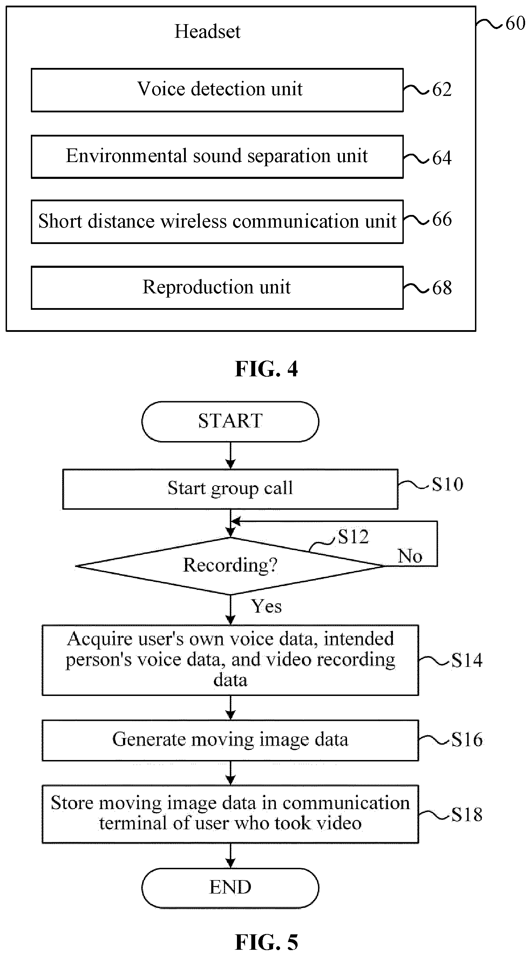

The configuration of the headset used for this system is explained below. Fig. 4 is a block diagram illustrating the configuration of the headset 60 according to the embodiment. Other headsets 60A-60C have the same configuration as that of the headset 60. The headset 60 has a voice detection unit 62, an environmental sound separation unit 64, a short distance wireless communication unit 66, and a reproduction unit 68.

The voice detection unit 62 detects the ambient sounds and the voices of the user wearing the head set 60. The environmental sound separation unit 64 separates environmental sounds from the detected voices if necessary. As described above, regarding turning on/off the environmental sound cut function, the environmental sound selection unit 28 of the communication terminal 10 of a user who is taking a video transmits a signal to start or stop to cut off an environmental sound through the communication unit 40. When the communication unit 40 of the communication terminal 10 of a user whose video is being taken receives the start signal or stop signal, the environmental sound selection unit 28 of the communication terminal 10 of the user whose video is being taken transmits the start signal or stop signal to cut off an environmental sound to the headset 60 through short distance wireless communication. When receiving the start signal or stop signal to cut off an environmental sound through the short distance wireless communication unit 66 described later, the environmental sound separation unit 64 starts or stops the environmental sound cut function in response to the received signal.

The short distance wireless communication unit 66 connects with the communication terminal 10 and transmits and receives data and signals through Bluetooth ^{®} Low Energy (BLE) standard communication. The reproduction unit 68 reproduces intended person's voices acquired from the communication terminal 10 and user's own voices detected by the voice detection unit 62 through the short distance wireless communication unit 66. If the communication terminal 10 has the above-mentioned functions of the headset 60, the headset 60 may be omitted from the system configuration. If the communication terminal 10 has the communication management function of the server 100, the server 100 may be omitted from the system configuration.

### Video recording process

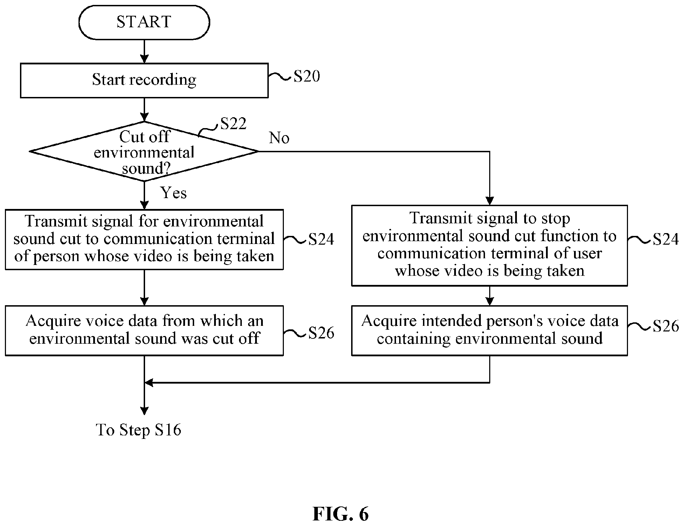

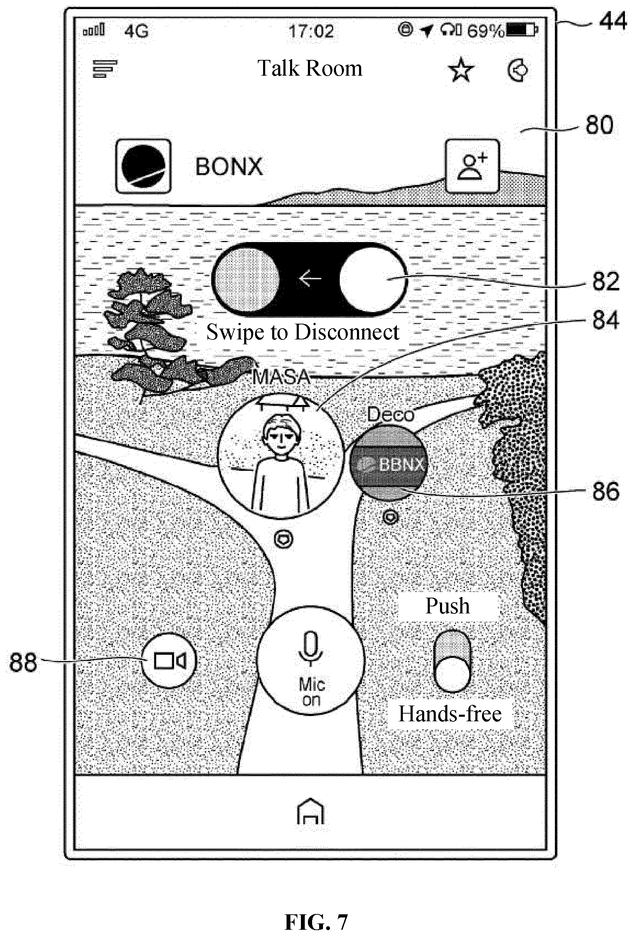

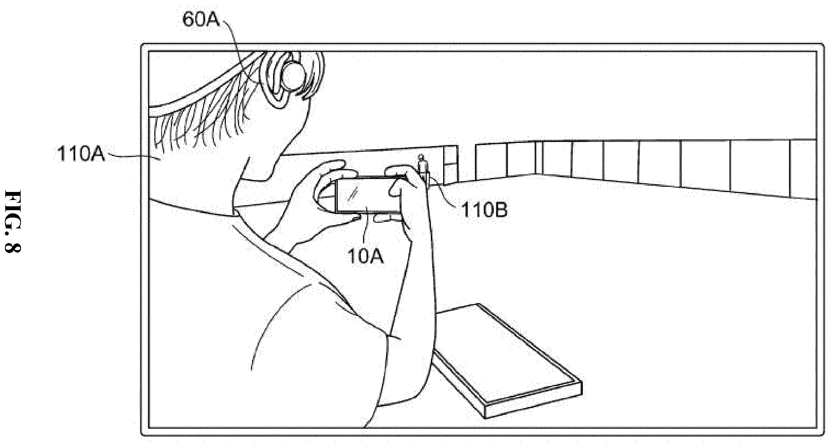

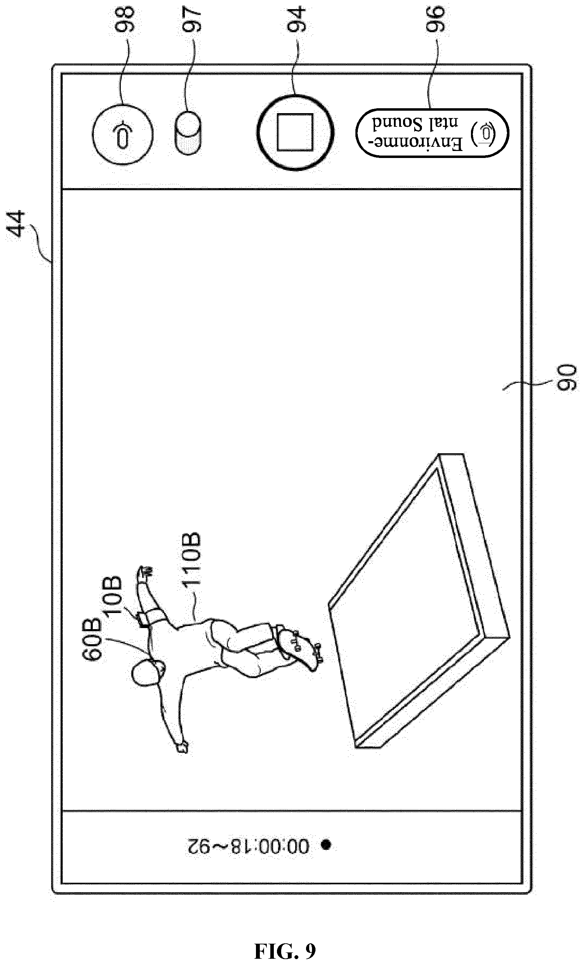

One example video recording process of this system is explained below with reference to Figs. 5 to 9. Fig. 5 is a flow chart illustrating one example video recording procedure during a group call according to the embodiment. Fig. 6 is a flow chart illustrating one example procedure to turn on/off the environmental sound cut function during video recording according to the embodiment. Fig. 7 shows one example screen of the communication terminal according to the embodiment during a group call. Fig. 8 is a flow chart illustrating one example video recording scene during a group call according to the embodiment. Fig. 9 is a flow chart illustrating one example video recording screen during a group call according to the embodiment.

The user 110A starts a group call with other users 110B and 110C (Step S10). The group call is started when the call management unit 14 communicatively connects with the members of a preset group through the server 100. The group call may be conducted through voice packet communication or a usual mobile phone network.

Fig. 7 shows one example screen displayed in the display unit 44 of the communication terminal 110A during a group call. The group call screen 80 displays a button 82 to connect and disconnect close a call, icons 84 and 86 indicating users 110B and 110C, respectively, during a group call, and a button 88 to start video recording, and others.

For example, if the user 110A records the video of skateboarding of the user 110B who is a member during a call (Yes in Step S12), the switch unit 30 displays the video recording screen 90 shown in Fig. 9 by tapping the button 88 to start video recording, as shown in Fig. 8. The user whose video is taken 110B gives performances, wearing the communication terminal 10B and the headset 60B as shown in Fig. 9. The user 110A takes a video with the camera of the imaging unit 46 installed in the user's own communication terminal 10A and stores the video in the memory unit 48 of the communication terminal 10A. The user 110B, the performer, gives performances without operating the communication terminal 10B at all. The communication between the communication terminals 10A and 10B are being established during a time including the performance time. The voice (voice data) of the user 110B, the performer, is transmitted to the communication terminal 10A of the user 110A who is taking video almost in real time.

The video recording screen 90 shown in Fig. 9 displays time information 92 indicating a time since video recording started, a button 94 to switch to the stop/start of video recording, a button 96 to turn on/off the environmental sound cut function, a button 97 to switch between the hands-free mode and the push talk mode, and a button 98 to set ON/OFF of the microphone mute.

When video recording starts, the communication terminal 10A causes the user's own voice data acquisition unit 16 to acquire the voices of the user 110A during a call and generate user's own voice data 50. The own voice data of the user 110A may be acquired from voices collected through the microphone of the communication terminal 10A or may be received and acquired from voice data transmitted from the headset 60A to the communication terminal 10A (Step S14). The generated user's own voice data 50 is stored in the memory unit 48. Time information may be added to the user's own voice data 50 if necessary.

The communication terminal 10A causes the intended person's voice data acquisition unit 18 to acquire intended person's voice data 52 that is the data on the voice of an intended person connected through communication (Step 14). The intended person's voice data acquisition unit 18 may generate intended person's voice data 52 from the voice of an intended person during a general voice call or receive and acquire a fragmentary voice packet generated in the communication terminal of an intended person in the communication unit 40 through the network 120. The acquired intended person's voice data 52 is stored in the memory unit 48.

As described above, the volume adjustment unit 26 may adjust the volumes of the acquired user's own voice data 50 and intended person's voice data 52. Specifically, the volume adjustment unit 26 may equalize the volumes of the user's own voice data 50 and the intended person's voice data 52 and reduce the volume of voices of a person who is taking a moving image. The adjustment by the volume adjustment unit 26 may be conducted automatically or may be conducted based on the set input and received from the input unit 42 by a user (the user 110A) who takes a video.

The video recording data acquisition unit 20 of the communication terminal 10A acquires video recording data 54 (only image data) containing the surroundings imaged by the imaging unit 46 (Step S14). The acquired video recording data 54 is stored in the memory unit 48. Time information may be added to the video recording data 54 and stored if necessary.

The communication terminal 10A causes the moving image generation unit 22 to add the user's own voice data 50 and the intended person's voice data 52 to the video recording data 54 and generate moving image data 56 (Step S16). If the user's own voice data 50, the intended person's voice data 52, and the video recording data 54 each have time information, the moving image generation unit 22 may generate moving image data 56 with synchronizing the time information. Moreover, if the intended person's voice data 52 and the video recording data 54 have time information, the moving image generation unit 22 may sequentially add the user's own voice data 50 to the video recording data 54 and add the intended person's voice data 52 to the video recording data 54 with synchronizing the time information to generate the moving image data 56. Alternatively, the moving image generation unit 22 may sequentially add the user's own voice data 50 and the intended person's voice data 52 to the video recording data 54 to generate moving image data 56 in real time, without using time information. For example, the moving image generation unit 22 may synthesize the user's own voice data 50 and the intended person's voice data 52 and add this synthesized voice data to the video recording data when the end of video recording is instructed.

The generated moving image data 56 is stored in the memory unit 48 of the communication terminal 10A of the user 110A (Step S18). This enables the moving image data 56 to be stored in the communication terminal 10A of the user 110A who took the video, so that the user's experience can be stored without communicating the video recording data. If the button 92 is tapped in the video recording screen 90 shown in Fig. 9 to end video recording, the switch unit 30 switches from the video recording screen to the call screen.

Fig. 6 is a flow chart illustrating one example procedure to turn on/off the environmental sound cut function during video recording. If video recording starts in Step S12 (Step S20), the video recording screen 90 shown in Fig. 9 is displayed. If environmental sound cut is selected by tapping the button 92 in the video recording screen 90 (Yes in Step S22), the environmental sound selection unit 28 transmits a signal for environmental sound cut to the communication terminal 10B of a person whose video is being taken (user 110B) through the communication unit 40 (Step S24).

When receiving the signal for environmental sound cut through the communication unit 40, the communication terminal 10B causes the environmental sound selection unit 28 to transmit the signal to the headset 60B through short distance wireless communication. When receiving the signal for environmental sound cut through the short distance wireless communication unit 66, the headset 60B causes the environmental sound separation unit 64 to separate an environmental sound from the voice detected by the voice detection unit 62. The short distance wireless communication unit 66 transmits the voice data from which an environmental sound was separated to the communication terminal 10B. The communication terminal 10B that receives the voice data from which an environmental sound was separated transmits the voice data to another communication terminal 10A through the communication unit 40. The communication terminal 10A receives and acquires the voice data from which an environmental sound was cut off through the communication unit 40 (Step S26). The subsequent process proceeds to Step S16 shown in Fig. 4. The environmental sound cut function that is being on offers an advantage of making communication smoother by delivering clear voices.

If the stop of the environmental sound cut function is selected by tapping the button 92 (No in Step S22), the environmental sound selection unit 28 transmits a signal to stop the environmental sound cut function to the communication terminal 10B of the user 110B whose video is being taken through the communication unit 40 (Step S28). When the communication terminal 10B receives the stop signal through the communication unit 40, the environmental sound selection unit 28 of the communication terminal 10B transmits a stop signal for the environmental sound cut function to the headset 60B through short distance wireless communication. The headset 60B causes the short distance wireless communication unit 66 to instruct the environment sound selection unit 64 to stop the environmental sound cut function in response to the stop signal for the environmental sound cut function that has been received. The headset 60B transmits the voice data detected by the voice detection unit 62 to the communication terminal 10B through the short distance wireless communication unit 66. The communication terminal 10B transmits the received voice data to the communication terminal 10A through the communication unit 40. The communication terminal 10A acquires the intended person's voice data 52 containing an environmental sound (Step S30). The subsequent process proceeds to Step S16 shown in Fig. 5. Stopping the environmental sound cut function can prevent the transmitting and receiving of voice data from being delayed to increase the realistic by delivering noises in the surrounding.

As described above, the environmental sound cut function can be freely turned on/off by the user 10A. If a user wants to cut off environmental sounds but leave some, the user 10A may select automatically or input and set continuous environmental sounds (breathing and wind noises) to be cut off and sudden environment sounds (of a landing and a sharp turn) not to be cut off.

The moving image data 56 generated as described above may be not only stored in the communication terminal 10A of the user 110A but also transmitted to and shared with other users 110B and 110C through the communication unit 40. The edit unit 25 may receive and acquire moving image data generated by another communication terminal 10C through the communication unit 40 and mix the acquired moving image data with the moving image data 56 generated in the user's own communication terminal 10A. For example, the user 110A takes a moving image of user 110B's performance with the terminal 10A while another user 110C is taking a moving image of user 110B's performance from a position and an angle that are different from those at which the user 110A is. Their generated moving image data are mixed with each other to entertain the users. The edited moving image data may be stored in the memory unit 48 and shared with other users if necessary.

The delivery unit 24 of the communication terminal 10A of a person who takes a video (user 110A) may add the acquired user's own voice data 50 and intended person's voice data 52 to the video recording data imaged by the imaging unit 46 during a call and live-stream (real-time distribute) the added data to other communication terminals through the communication unit 40 and the network 120. The live-streaming from the delivery unit 24 may be conducted in parallel with or in place of the generation of a moving image by the moving image generation unit 22.

### Effect

According to the embodiment described above, the video recording mode is switched on during a group call, user's own voice data 52, intended person's voice data 54, and video recording data 54 are acquired by the communication terminal 10A, and the user's own voice data 52 and the intended person's voice data 54 are added to the video recording data 54, whereby moving image data 56 is generated. Therefore, a video can be recorded during a group call, and the video recording data 54 can be stored in a user's communication terminal 10, including a user's experience. Furthermore, the user's own voice data 52 and the intended person's voice data 54 can be added to the video recording data, and the added data is live-streamed to other communication terminals. Since a small amount of intended person's voice data is acquired through communication, and the video recording data taken by the communication terminal 10A at hand and the intended person's voice data (as well as the user's own voice data) are synthesized, the delay of the intended person voice can be shortened for the image of the video recording data. As the result, natural moving image data can be generated and live-streamed. Even if the data delay occurs during delivery, the moving image data in which the video recording data and the voice data are naturally synthesized is delivered. This enables a user to share a more natural moving image with others.

The above-mentioned embodiment is one example, and the present invention is not limited thereto. For example, the above-mentioned embodiment uses the server 100 and the headset 60 for the system. If the communication terminal has the functions of the server 100 and the headset 60, the system can include only the communication terminal 10. Moreover, the above-mentioned embodiment explains a group call between users 110A-110C as an example. The number of users may be increased. The present invention may be provided for a one to one call without limitation. The embodiment explains skateboarding performance which video is taken as an example but is not limited thereto. For example, in noisy conditions in a maintenance factory in an airport, a plurality of communication terminals of the embodiment can be used to store the appearance and the voice of a maintenance worker in real time (in a moving image), removing the influence of noises to generate a maintenance record without additional devices. In this case, the site manager who takes a video can instruct a worker, checking the image around the worker's hands that is enlarged by the imaging function of the communication terminal 10 held by the site manager as well as checking the situation that the site manager is seeing. This enables vocal instruction to be delivered to the worker without delay, removing noises, and keep the vocal instruction in a maintenance record at the same time.

The effect described in the above-mentioned embodiment is only the most preferable effect produced from the present invention. The effects of the present invention are not limited to those described in the embodiments of the present invention. The present invention may be provided as an application program executed by a communication terminal. This application program may be downloaded through the network.

### Industrial applicability

According to the present invention, the video recording mode is switched on during a call, user's own voice data, intended person's voice data, and video recording data are acquired by the communication terminal, and the user's own voice data and the intended person's voice data are added to the video recording data, whereby moving image data is generated. Therefore, a video can be recorded during a call, and the moving image data can be stored in a user's communication terminal, including a user's experience. Furthermore, the user's own voice data and the intended person's voice data are added to the video recording data, and the added data is live-streamed to other communication terminals. This enables user's experience (which a user has seen and heard) to be stored in a user's own communication terminal and to be shared with other users. Therefore, the present invention is suitable as a convenient communication tool.

### Description of reference numerals

- 10 and 10A-10C:: Communication terminal
- 12:: Control unit
- 14:: Communication unit
- 16:: User's own voice data acquisition unit
- 18:: Intended person's voice data acquisition unit
- 20:: Video recording data acquisition unit
- 22:: Moving image generation unit
- 24:: Delivery unit
- 25:: Edit unit
- 26:: Volume adjustment unit
- 28:: Environmental sound selection unit
- 30:: Switch unit
- 40:: Communication unit
- 42:: Input unit
- 44:: Display unit
- 46:: Imaging unit
- 48:: Memory unit
- 50:: User's own voice data
- 52:: Intended person's voice data
- 54:: Video recording data
- 56:: Moving image data
- 60: and 60A-60C: Headset
- 62:: Voice detection unit
- 64:: Environmental sound separation unit
- 66:: Short distance wireless communication unit
- 68:: Reproduction unit
- 80:: Group call screen
- 82, 88, 94, 97, and 98:: Button
- 84 and 86:: Icon
- 88:: Mark
- 90:: Video recording screen
- 100:: Server
- 110A-110C:: User

## Claims

1. A communication terminal comprising:
a communication unit that communicatively connects with another communication terminal;
an intended person's voice data acquisition unit that acquires intended person's voice data that is data on the voice of an intended person who is connected through communication;
an imaging unit that takes a video of the outside;
a video recording data acquisition unit that acquires video recording data taken by the imaging unit; and
a moving image generation unit that adds the intended person's voice data to the video recording data and generates moving image data.

2. The communication terminal according to claim 1, further comprising:
a user's own voice data acquisition unit that acquires user's voice and generates user's own voice data, during a call, wherein
the moving image generation unit adds the user's own voice data and the intended person's voice data to the video recording data and generates moving image data.

3. The communication terminal according to claim 1, wherein the intended person's voice data acquisition unit generates the intended person's voice data from the voice of an intended person during a call.

4. The communication terminal according to claim 1, wherein the intended person's voice data acquisition unit acquires a fragmentary voice packet generated in the communication terminal of an intended person from the communication unit.

5. The communication terminal according to any one of claims 1 to 4, wherein the user's own voice data, the intended person's voice data, and the video recording data each have time information, and the moving image generation unit adds the user's own voice data and the intended person's voice data to the video recording data with synchronizing the time information.

6. The communication terminal according to any one of claims 1 to 4, wherein the intended person's voice data and the video recording data each have time information, and the moving image generation unit sequentially add the user's own voice data to the video recording data and adds the intended person's voice data to the video recording data with synchronizing the time information to generate the moving image data.

7. The communication terminal according to any one of claims 1 to 4, wherein the moving image generation unit sequentially adds the user's own voice data and the intended person's voice data to the video recording data.

8. The communication terminal according to any one of claims 1 to 7, further comprising:
a moving image edit unit that acquires moving image data generated by another communication terminal from the communication unit and edits the acquired moving image data with the user's own communication terminal.

9. The communication terminal according to any one of claims 1 to 8, further comprising:
a delivery unit that delivers the moving image data to another communication terminal through the communication unit.

10. A communication terminal comprising:
a communication unit that communicatively connects with another communication terminal;
an intended person's voice data acquisition unit that acquires intended person's voice data that is data on the voice of an intended person who is connected through communication; and
a delivery unit that adds the intended person's voice data to the video recording data containing the video of the outside and delivers the added data to the another communication terminal through the communication unit.

11. An application program for a communication terminal that causes a communication terminal to the steps of:
communicatively connecting with another terminal;
acquiring intended person's voice data that is data on the voice of an intended person connected through communication;
taking a video of the outside and acquiring the video recording data; and
adding the intended person's voice data to the video recording data and generating moving image data.

12. An application program for a communication terminal that causes a communication terminal to the steps of:
communicatively connecting with another terminal;
acquiring intended person's voice data that is data on the voice of an intended person connected through communication; and
adding the intended person's voice data to the video recording data containing the video of the outside and delivering the added data to the another communication terminal communicatively connected.

13. A communication method executed by a communication terminal, comprising the steps of:
communicatively connecting with another terminal;
acquiring intended person's voice data that is data on the voice of an intended person connected through communication; and
adding the intended person's voice data to the video recording data containing a video of the outside and generating moving image data.
